(19) **Europäisches Patentamt**
**European Patent Office**
**Office européen des brevets**

(11) **EP 3 433 014 B1**

(12) **EUROPÄISCHE PATENTSCHRIFT**

(45) Veröffentlichungstag und Bekanntmachung des Hinweises auf die Patenterteilung:
**15.04.2026 Patentblatt 2026/16**

(21) Anmeldenummer: **17717086.7**

(22) Anmeldetag: **20.03.2017**

(51) Internationale Patentklassifikation (IPC):
*B01J 37/02* *(2006.01)* *B01J 35/60* *(2024.01)*
*B01J 29/06* *(2006.01)* *B01J 29/035* *(2006.01)*
*B01J 29/40* *(2006.01)* *C01B 39/04* *(2006.01)*
*B01J 29/00* *(2006.01)* *B01J 20/10* *(2006.01)*
*B01J 20/30* *(2006.01)*

(52) Gemeinsame Patentklassifikation (CPC):
**C01B 37/005; B01J 20/103; B01J 20/3057;**
**B01J 20/3204; B01J 20/3225; B01J 20/3238;**
**B01J 29/035; B01J 29/06; B01J 29/40;**
**B01J 35/647; B01J 35/651; B01J 35/695;**
**B01J 37/0225; B01J 37/0246;** B01J 29/00; (Forts.)

(86) Internationale Anmeldenummer:
**PCT/EP2017/056533**

(87) Internationale Veröffentlichungsnummer:
**WO 2017/162575 (28.09.2017 Gazette 2017/39)**

(54) **HERSTELLUNG VON ZEOLITH-BASIERTEN KOMPOSITMATERIALIEN MIT HIERARCHISCHER POROSITÄT**

PRODUCTION OF ZEOLITE-BASED COMPOSITE MATERIALS WITH HIERARCHICAL POROSITY

PRÉPARATION DE MATÉRIAUX COMPOSITES À POROSITÉ HIÉRARCHIQUE À BASE DE ZÉOLITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2016 DE 102016003731**

(43) Veröffentlichungstag der Anmeldung:
**30.01.2019 Patentblatt 2019/05**

(73) Patentinhaber: **Friedrich-Alexander-Universität Erlangen-Nürnberg**
**91058 Erlangen (DE)**

(72) Erfinder:
• **SCHWIEGER, Wilhelm**
**91058 Erlangen (DE)**
• **HARTMANN, Martin**
**91058 Erlangen (DE)**
• **KLUMPP, Michael**
**91058 Erlangen (DE)**
• **MACHOKE, Albert Gonche Fortunatus**
**91058 Erlangen (DE)**
• **WEISSENBERGER, Tobias**
**91058 Erlangen (DE)**

(74) Vertreter: **Vossius & Partner**
**Patentanwälte Rechtsanwälte mbB**
**Siebertstrasse 3**
**81675 München (DE)**

(56) Entgegenhaltungen:
WO-A1-92/19574     DE-T2- 3 853 402
DE-T2- 69 304 018     DE-T2- 69 411 905

(52) Gemeinsame Patentklassifikation (CPC): (Forts.)
B01J 2229/64; B01J 2229/66

(52) Gemeinsame Patentklassifikation (CPC): (Forts.)
B01J 2229/64; B01J 2229/66

**Beschreibung**

Die vorliegende Erfindung betrifft ein Verfahren zum Bereitstellen eines Kompositmaterials, bei dem eine Trägerstruktur mit einer Beschichtung versehen wird, welche eine zeolithische oder zeolithähnliche Komponente mit einer kontrollierten intra- und interkristallinen Porosität aufweist.

Das technisch weitverbreitetste Verfahren zur Herstellung eines Kompositmaterials, das mindestens eine aktive zeolitische oder zeolithähnliche Komponente sowie eine Trägerstruktur umfasst, ist das Beschichten der Trägerstruktur unter Zuhilfenahme eines geeigneten Bindermaterials. Konventionell werden solche aktiven (katalytisch oder sorptiv) Kompositmaterialien durch das Beschichten einer meist keramischen Trägerstruktur mit einer Suspension - dem sog. "Washcoat" - hergestellt, welches neben der Aktivkomponente (z.B. Zeolith) ein Bindermaterial enthält. Dem Beschichtungsschritt folgt eine geeignete Nachbehandlung (Temperaturbehandlung), durch welche dann das Bindematerial seine bindende Wirkung entfaltet (z.B. B. Mitra and D. Kunzru: Washcoating of Different Zeolites on Cordierite Monoliths. In: Journal of the American Ceramic Society, 2008 (91) 64-70). Als industriell relevantes Beispiel für die Verwendung eines solchen Kompositmaterials seien hier die mit Zeolith beschichteten keramischen Wabenkörpern genannt, wie sie u.a. bei der Entstickung von Abgasströmen zur Anwendung kommen. Neben der genannten Beschichtung von Trägerstrukturen lässt sich die Formgebung zur Herstellung von Granulien oder Extrudaten für beispielsweise katalytische oder sorptive Festbettanwendungen als einen Spezialfall der geträgerten Kompositmaterial verstehen, bei dem die tragende Wirkung durch das Zusammenspiel Binder-Aktivkomponente selbst ausgeübt wird ("selbstragendes System").

Unabhängig davon, ob ein selbsttragendes oder ein geträgertes System betrachtet wird, ergibt sich für solche Materialien der Nachteil der Reduzierung der Aktivität des resultierenden Materials durch die Verdünnung der aktiven Komponente (Zeolith) mit dem Bindermaterial (Binder).

Ein Verfahren, welches diesen Nachteil zu umgehen versucht, aber noch keine großtechnische Anwendung besitzt, ist die Aufkristallisation bzw. reaktive Aufkristallisation der zeolithischen Aktivkomponente auf einer inerten bzw. reaktiven Trägerstruktur. Intrinsisch ist dieses Verfahren jedoch auf Aktivmaterialien beschränkt, welche aus chemischer und struktureller Sicht die Möglichkeit einer Aufkristallisation bieten - typische Beispiele hierfür sind daher auch aluminium- und siliziumhaltige Trägermaterialien. Auch wenn sich so bindemittelfreie Kompositmaterialien herstellen lassen (z.B. J. Bauer, R. Herrmann, W. Mittelbach and W. Schwieger: Zeolite/aluminum composite adsorbents for application in adsorption refrigeration. In: International Journal of Energy Research, 2009 (33) 1233-1249; S. Ivanova, B. Louis, B. Madani, J. P. Tessonnier, M. J. Ledoux and C. Pham-Huu: ZSM-5 coatings on β-SiC monoliths: Possible new structured catalyst for the methanol-to-olefins process. In: Journal of Physical Chemistry C, 2007 (111) 4368-4374), so unterliegt dieses Verfahren doch starken Limitierungen bezüglich der Trägerauswahl sowie der Kombination Träger-Aktivkomponente. Zudem entsteht besonders im Fall der Aufkristallisation auf einem inerten Trägermaterial eine erhebliche Menge an Überschusspulver, welches nicht zur eigentlichen Herstellung des Kompositmaterials beiträgt (z.B. A. Zampieri, A. Dubbe, W. Schwieger, A. Avhale and R. Moos: ZSM-5 zeolite films on Si substrates grown by in situ seeding and secondary crystal growth and application in an electrochemical hydrocarbon gas sensor. In: Microporous and Mesoporous Materials, 2008 (111) 530-535).

Darüber hinaus sind konventionelle Verfahren insofern Beschränkungen unterworfen, als insbesondere die Synthese von nanoskaligen Zeolithen nur bis zu einem maximalen Umsatz von deutlich unter 100 % bezüglich der netzwerkbildenden Atome vollzogen werden kann. So werden in der Literatur für den Zeolithen ZSM-5 (Kristallgröße ca. 100 nm) Umsatzgrade bis maximal 65 % berichtet (C. S. Tsay and A. S. T. Chiang: The synthesis of colloidal zeolite TPA-silicalite-1. In: Microporous and Mesoporous Materials, 1998 (26) 89-99; A. E. Persson, B. J. Schoeman, J. Sterte and J. E. Otterstedt: The synthesis of discrete colloidal particles of TPA-silicalite-1. In: Zeolites, 1994 (14) 557-567), was Abtrennverfahren nach sich zieht. Eine Möglichkeit, diese Limitierung zu umgehen stellt der "top-down"-Ansatz dar, bei dem die Nanoskaligkeit durch Aufmahlung von großen Zeolithkristallen hergestellt wird. In diesem Fall jedoch sinkt dabei deutlich die Kristallinität der so erhaltenen Nanokristalle, was eine Nachkristallisation notwendig macht (T. Wakihara, A. Ihara, S. Inagaki, J. Tatami, K. Sato, K. Komeya, T. Meguro, Y. Kubota and A. Nakahira: Top-Down Tuning of Nanosized ZSM-5 Zeolite Catalyst by Bead Milling and Recrystallization. In: Crystal Growth & Design, 2011 (11) 5153-5158). Letztere ist jedoch aus ökonomischen und ökologischen Gründen nachteilig.

WO 92/19574 A1 offenbart ein Verfahren zur Herstellung von Zeolithschichten auf einem Träger.

Aufgabe der vorliegenden Erfindung war es daher, ein Verfahren bereit zu stellen, mit dessen Hilfe auf effiziente Weise Zeolithmaterialien oder zeolithähnliche Materialien ohne die Notwendigkeit zum Einsatz eines zuzusetzenden Bindermaterials auf Trägerstrukturen aufgebracht werden können. Darüber hinaus sollte das Verfahren das Erzeugen gewünschter Porositätseigenschaften erlauben.

Als Lösung dieser Aufgabe stellt die vorliegende Erfindung ein Verfahren zum Erzeugen eines Kompositmaterials mit einer Trägerstruktur und einer Beschichtung auf der Oberfläche der Trägerstruktur bereit, wobei die Beschichtung als Aktivkomponente Kristalle eines Zeolithmaterials oder eines zeolithähnlichen Materials umfasst, und wobei in der Beschichtung interkristalline Meso- und/oder Makroporen ausgebildet sind. Das erfindungsgemäße Verfahren umfasst die folgenden Schritte:

a) Bereitstellen einer Suspension, die nanoskalige Ausgangskristalle aus einem Zeolithmaterial oder einem zeolithähnlichen Material, sowie Vorläuferverbindungen des Zeolithmaterials oder zeolithähnlichen Materials enthält,

b) Auftragen der in Schritt a) bereitgestellten Suspension auf die Oberfläche der Trägerstruktur,

c) Verdichten der in Schritt b) aufgetragenen Suspension durch zumindest teilweises Entfernen des Lösungsmittels, das die flüssige Phase der Suspension bildet, um eine Beschichtung zu erhalten, die die Ausgangskristalle und die Vorläuferverbindungen enthält,

d) Halten der in Schritt c) erhaltenen Beschichtung auf der Oberfläche der Trägerstruktur in einer dampfhaltigen Atmosphäre bei einer erhöhten Temperatur, so dass die enthaltenen Vorläuferverbindungen in ein Zeolithmaterial oder ein zeolithähnliches Material umgewandelt werden und zusammen mit den Ausgangskristallen die Beschichtung bilden, die Kristalle eines Zeolithmaterials oder eines zeolithähnlichen Materials umfasst,

wobei das Bereitstellen der Suspension in Schritt a) erfolgt, indem die Ausgangskristalle durch teilweises Umsetzen eines Reaktionsgemischs synthetisiert werden, das (i) ein Lösungsmittel, sowie (ii) die Vorläuferverbindungen des Zeolithmaterials oder zeolithähnlichen Materials enthält,

und wobei die so bereitgestellte Suspension in Schritt b) mit den darin enthaltenen Ausgangskristallen und nicht umgesetzten Vorläuferverbindungen ohne vorheriges Isolieren der synthetisierten Ausgangskristalle auf die Oberfläche der Trägerstruktur aufgetragen wird.

Gemäß einer bevorzugten Ausführungsform enthält das Reaktionsgemisch zusätzlich zu dem Lösungsmittel und den Vorläuferverbindungen des Zeolithmaterials oder zeolithähnlichen Materials (iii) eine Templatspezies.

Die so bereitgestellte Suspension wird danach in Schritt b) mit den in der Suspension enthaltenen Ausgangskristallen und nicht umgesetzten Vorläuferverbindungen ohne vorheriges Isolieren der synthetisierten Ausgangskristalle auf die Oberfläche der Trägerstruktur aufgetragen. Entsprechend umfasst das Verfahren dieser bevorzugten Ausführungsform die folgenden Schritte:

a) Bereitstellen einer Suspension, die nanoskalige Ausgangskristalle aus einem Zeolithmaterial oder einem zeolithähnlichen Material, sowie Vorläuferverbindungen des Zeolithmaterials oder zeolithähnlichen Materials enthält, indem die Ausgangskristalle durch teilweises Umsetzen eines Reaktionsgemischs synthetisiert werden, das (i) ein Lösungsmittel, (ii) die Vorläuferverbindungen des Zeolithmaterials oder zeolithähnlichen Materials, sowie (iii) eine Templatspezies enthält,

b) Auftragen der in Schritt a) bereitgestellten Suspension mit den darin enthaltenen Ausgangskristallen und nicht umgesetzten Vorläuferverbindungen ohne vorheriges Isolieren der synthetisierten Ausgangskristalle auf die Oberfläche der Trägerstruktur,

c) Verdichten der in Schritt b) aufgetragenen Suspension durch zumindest teilweises Entfernen des Lösungsmittels, das die flüssige Phase der Suspension bildet, um eine Beschichtung zu erhalten, die die Ausgangskristalle und die Vorläuferverbindungen enthält,

d) Halten der in Schritt c) erhaltenen Beschichtung auf der Oberfläche der Trägerstruktur in einer dampfhaltigen Atmosphäre bei einer erhöhten Temperatur, so dass die enthaltenen Vorläuferverbindungen in ein Zeolithmaterial oder ein zeolithähnliches Material umgewandelt werden und zusammen mit den Ausgangskristallen die Beschichtung bilden, die Kristalle eines Zeolithmaterials oder eines zeolithähnlichen Materials umfasst.

Mit Hilfe dieses Verfahrens lassen sich auf effiziente Weise Zeolithmaterialien oder zeolithähnliche Materialien auf Trägerstrukturen aufbringen, ohne dass es notwendig ist, ein zuzusetzendes Bindermaterial zu verwenden. Das erfindungsgemäße Verfahren eröffnet dabei die Möglichkeit, die Porositätseigenschaften und Aktivitätseigenschaften (z.B. katalytischer und/oder sorptiver Natur) des aufgebrachten Materials gezielt auf eine potentielle Anwendung hin optimiert einzustellen: So ist die Porosität, welche sich in dem Kompositmaterial einstellt zum einen gegeben durch eine die Porosität des Aktivmaterials selbst (beispielsweise mikroporöser Zeolith), zum anderen gegeben durch die Porosität der daraus aufgebauten Schicht, sowie durch eine potenziell vorhandene Porosität des Trägermaterials (beispielsweise dreidimensionale, offene zellulare Struktur), sodass letztendlich eine Hierarchie bezüglich der Porengröße durch Anpassung von Prozess- und Materialparametern eingestellt werden kann. Zudem eröffnet das erfindungsgemäße Verfahren die Möglichkeit, eine Multifunktionalität des aufgebrachten Materials durch Kombinationen aus verschiedenen Aktivkomponenten oder deren Vorläufer bereits in der Suspension herzustellen, was dadurch aufwändige und kostenintensive Verfahren wie beispielsweise den Ionenaustausch oder Imprägnierung ersetzt.

Darüber hinaus kann insbesondere mit Hilfe der vorstehend beschriebenen erfindungsgemäßen Ausführungsform, bei der eine Suspension von Nanokristallen und Vorläufermaterial erzeugt und anschließend ohne Isolieren der Nanokristalle als Beschichtung auf die Oberfläche der Trägerstruktur aufgetragen wird, eine äußerst hohe Effizienz des Verfahrens bezüglich der stofflichen Nutzung der Ausgangsmaterialien der Synthese von nanoskaligen Zeolithmaterialien oder zeolithähnlichen Materialien verbunden. So sind überraschenderweise Umsatzgrade von bis zu 100% bezüglich der netzwerkbildenden Atome erreichbar. Ein Vollumsatz bezüglich der netztwerkbildenden Komponenten eröffnet so die Möglichkeit auf Verfahren zur Abtrennung des nanoskaligen Produktes von den nicht umgesetzten Komponenten in der Produktsuspension zu verzichten, was drastische Einsparungen bezüglich der zeit- und kostenintensiver Abtrennverfahren als auch bezüglich des Stoffeinsatzes mit sich bringt.

Schließlich kann das Aufbringen einer Beschichtung in Schritt a) durch gängige Verfahren erfolgen, und ohne dass die aufgetragene Beschichtung im weiteren Verlauf des Verfahrens makroskopischen Änderungen unterläuft (beispielsweise örtliches Ausbreiten der Schicht durch "Verlaufen" der Beschichtung o.ä.). So eröffnet sich die Möglichkeit, auf eine Trägerstruktur auch lokal begrenzt Material mit dem zuvor genannten Nutzen aufzubringen. Das erfindungsgemäße Verfahren zum Erzeugen eines Kompositmaterials mit einer Trägerstruktur und einer Beschichtung auf der Oberfläche der Trägerstruktur, wobei die Beschichtung als Aktivkomponente Kristalle eines Zeolithmaterials oder eines zeolithähnlichen Materials umfasst und wobei in der Beschichtung interkristalline Meso- und/oder Makroporen ausgebildet sind,

ist dadurch gekennzeichnet, dass das Verfahren die folgenden Schritte umfasst:

a) Bereitstellen einer Suspension, die nanoskalige Ausgangskristalle aus einem Zeolithmaterial oder einem zeolithähnlichen Material, sowie Vorläuferverbindungen des Zeolithmaterials oder zeolithähnlichen Materials enthält,
b) Auftragen der in Schritt a) bereitgestellten Suspension auf die Oberfläche der Trägerstruktur,
c) Verdichten der in Schritt b) aufgetragenen Suspension durch zumindest teilweises Entfernen des Lösungsmittels, das die flüssige Phase der Suspension bildet, um eine Beschichtung zu erhalten, die die Ausgangskristalle und die Vorläuferverbindungen enthält,
d) Halten der in Schritt c) erhaltenen Beschichtung auf der Oberfläche der Trägerstruktur in einer dampfhaltigen Atmosphäre bei einer erhöhten Temperatur, so dass die enthaltenen Vorläuferverbindungen in ein Zeolithmaterial oder ein zeolithähnliches Material umgewandelt werden und zusammen mit den Ausgangskristallen die Beschichtung bilden, die Kristalle eines Zeolithmaterials oder eines zeolithähnlichen Materials umfasst,

wobei das Bereitstellen der Suspension in Schritt a) erfolgt, indem die Ausgangskristalle durch teilweises Umsetzen eines Reaktionsgemischs synthetisiert werden, das (i) ein Lösungsmittel, sowie (ii) die Vorläuferverbindungen des Zeolithmaterials oder zeolithähnlichen Materials enthält,
und wobei die so bereitgestellte Suspension in Schritt b) mit den darin enthaltenen Ausgangskristallen und nicht umgesetzten Vorläuferverbindungen ohne vorheriges Isolieren der synthetisierten Ausgangskristalle auf die Oberfläche der Trägerstruktur aufgetragen wird.

Das erfindungsgemäße Verfahren eignet sich zum Einsatz mit einer Vielzahl von Trägerstrukturen in einer Vielzahl von Formen. Beispielsweise können als Trägerstruktur zweidimensional ausgedehnte Strukturen wie Platten, Bleche oder Folien zum Einsatz kommen. Diese können planar oder geformt sein. Weitere Beispiele für geeignete geometrische Formen der Trägerstruktur sind Granulate, Röhren, Wabenkörper, oder offenzellige schaumartige Strukturen. Auch eine gewisse Rauhigkeit der Oberflächen ist von Vorteil, da sie beispielsweise die stabile Anbindung der Beschichtung im Kompositmaterial begünstigt. Bevorzugt handelt es sich bei der Trägerstruktur um eine poröse Struktur, beispielsweise eine Struktur aus einem Material, das Makroporen aufweist.

Beispiele für geeignete Materialien, die die Trägerstruktur bilden können oder in ihr enthalten sein können, sind bevorzugt silikatische Materialien, keramische Materialien, metallische Materialien, oder Kombinationen daraus.

Die Beschichtung im erfindungsgemäß gebildeten Kompositmaterial kann die Oberfläche der Trägerstruktur vollständig oder teilweise bedecken. Wie vorstehend erwähnt eignet sich das erfindungsgemäße Verfahren unter anderem dazu, eine Beschichtung mit Kristallen aus einem Zeolithmaterial oder zeolithähnlichen Material lokal begrenzt auf Teile der Oberfläche eines Trägermaterials aufzubringen, beispielsweise um so gezielt Oberflächen zu strukturieren.

Die Beschichtung des erfindungsgemäß gebildeten Kompositmaterials weist als Aktivkomponente Kristalle eines Zeolithmaterials oder eines zeolithähnlichen Materials auf, vorzugsweise Kristalle eines Zeolithmaterials. Aktivitäten, die mit Hilfe einer solchen Aktivkomponente an der Oberfläche des Kompositmaterials bereit gestellt werden können sind dem Fachmann geläufig. Zeolithmaterialien bzw. zeolithähnliche Materialien zeichnen sich beispielsweise durch gewünschte Sorptionseigenschaften und/oder durch katalytische Eigenschaften aus. Katalytische Eigenschaften können dabei beispielsweise durch die Einlagerung geeigneter katalytisch aktiver Gastmoleküle in die zeolithische Gerüststruktur des Zeolithmaterials bzw. zeolithähnlichen Materialien erzielt oder verstärkt werden.

Neben den Kristallen eines Zeolithmaterials oder eines zeolithähnlichen Materials kann die Beschichtung des erfindungsgemäß gebildeten Kompositmaterials ein oder mehrere weitere Aktivkomponenten und/oder ein oder mehrere inerte Materialien umfassen. Die Beschichtung kann aber auch aus den Kristallen eines Zeolithmaterials oder eines zeolithähnlichen Materials, vorzugsweise den Kristallen eines Zeolithmaterials, bestehen. Wie sich aus den eingangs erläuterten Vorteilen der Erfindung ergibt, ist es insbesondere bevorzugt, dass die Beschichtung des erfindungsgemäß gebildeten Kompositmaterials, wie auch die zu ihrer Herstellung in Schritt a), b) und c) des erfindungsgemäßen Verfahrens gebildete Vor- oder Zwischenstufen, frei sind von Bindermaterial. Dabei sind natürlich das Zeolithmaterial oder das zeolithische Material bzw. ihre Vorläuferverbindungen vom Begriff des Bindermaterials nicht umfasst.

Im Folgenden wird die Zusammensetzung eines Zeolithmaterials bzw. zeolithähnlichen Materials zur Verwendung im Rahmen der vorliegenden Erfindung erläutert. Soweit nicht anders angegeben, gelten diese Angaben sowohl für die Kristalle eines Zeolithmaterials bzw. zeolithähnlichen Materials in der Beschichtung des Kompositmaterials, das als Endprodukt des erfindungsgemäßen Verfahrens hergestellt wird, als auch für die Ausgangskristalle aus einem Zeolithmaterial oder einem zeolithähnlichen Material, die in Schritt a) des Verfahrens eingesetzt werden.

Das Zeolithmaterial und das zeolithähnliche Material weisen eine zeolithische Gerüststruktur auf. Solche Gerüststrukturen sind dem Fachmann bekannt. Sie weisen Kanäle und/oder Käfige auf, die durch Öffnungen (Poren) verbunden sind und beispielsweise zur Einlagerung von Gastmolekülen geeignet sind.

Als Zeolithmaterial wird dabei typischerweise ein Material mit einer zeolithischen Gerüststruktur bezeichnet, die aus Si, O und ggf. Al gebildet wird. Siliciumatome (Si), Sauerstoffatome (O) und ggf. Aluminiumatome (Al) sind typischerweise die einzigen Elemente, aus denen die zeolithische Gerüststruktur im Zeolithmaterial aufgebaut ist. In der zeolithischen Gerüststruktur eines Zeolithmaterials sind Siliciumoxid-Tetraeder und ggf. Aluminiumoxid-Tetraeder über gemeinsame Sauerstoffatome verknüpft. Während die Zusammensetzung der einzelnen Tetraeder mit $SiO_4$ bzw. $AlO_4$ dargestellt werden kann, wird die Stöchiometrie der Oxidkomponenten im Zeolithmaterial aufgrund der von mehreren Tetraedern geteilten Sauerstoffatome in der Regel mit der Formel $SiO_2$ oder $SiO_{4/2}$ bzw. $AlO_2$ oder $AlO_{4/2}$ angegeben.

Als zeolithähnliches Material wird ein Material bezeichnet, das ebenfalls eine zeolithische Gerüststruktur aufweist, die jedoch nicht nur aus Si, O und ggf. Al gebildet sein kann. Vielmehr können außer Si, O und ggf. Al andere Elemente am Aufbau der Gerüststruktur beteiligt sein oder diese bilden. Dabei handelt es sich typischerweise um Elemente, die in tetraedrischer Koordination vorliegen können und beispielsweise in der Lage sind, ein oxidisches Netzwerk zu bilden (hier auch als "netzwerkbildendes Element" bezeichnet). Typische netzwerkbildende Elemente, die neben Si und ggf. Al zur Bereitstellung eines zeolithischen Gerüstmaterials geeignet sind, sind andere Elemente der 3, 4 und 5 Hauptgruppe des Periodensystems (Gruppen 13, 14 und 15 nach aktueller IUPAC Klassifikation). Beispiele sind eines oder mehrere Elemente, ausgewählt aus P, B, Ti und Ga. Unter zeolithähnlich versteht der Fachmann auch Materialien, die im Extremfall auch kein Si enthalten können, dafür aber Tetraedernetzwerke z.B. aus Aluminium und Phospor bilden, wie die sogenannten Aluminiumphosphate (AIPO-n-Materialien), und identische oder ähnliche Strukturen ausbilden können, wir sie die klassischen Zeolithe besitzen. Vorzugsweise ist die zeolithische Gerüststruktur eines zeolithähnlichen Materials gebildet aus Si, O, ggf. Al, und einem oder mehreren Elementen, ausgewählt aus P, B, Ti und Ga.

Im Zusammenhang mit dem erfindungsgemäß bereitgestellten Kompositmaterial und den erfindungsgemäß eingesetzten Ausgangskristallen werden Zeolithmaterialien und zeolithähnliche Materialien auch mit dem gemeinsamen Oberbegriff "zeolithische Materialien" bezeichnet.

Wie dem Fachmann geläufig ist, wird die zeolithische Gerüststruktur von Zeolithmaterialien und zeolithähnlichen Materialien durch tetraedrische Grundeinheiten gebildet, die über gemeinsame Sauerstoffatome verknüpft sind. In diesen tetraedrischen Grundeinheiten ist ein Atom T von vier Sauerstoffatomen umgeben, die aber jeweils mit benachbarten Tetraedern geteilt werden so dass die Grundeinheiten auch mit der Formel $TO_2$, oder $TO_{4/2}$, beschrieben werden. Dabei bezeichnet T ein Element, das in der Lage ist, ein oxidisches Netzwerk zu bilden und in tetraedrischer Koordination vorliegen kann (hier auch als "netzwerkbildendes Element" bezeichnet). Typische netzwerkbildende Elemente, deren Oxide zur Bereitstellung von Zeolithmaterialien und zeolithähnlichen Materialien geeignet sind, sind Elemente der 3, 4 und 5 Hauptgruppe des Periodensystems (Gruppen 13, 14 und 15 nach aktueller IUPAC Klassifikation). Beispiele sind eines oder mehrere Elemente, ausgewählt aus Si, Al, P, B, Ti, oder Ga. Treten dreiwertige Atome T in der Gerüststruktur in Form von verknüpften Tetraedern $TO_2$ auf, wie z.B. Al, B oder Ti, so tragen sie eine negative Formalladung. Diese Ladung wird in der Regel durch die Gegenwart von Kationen ausgeglichen, wobei Kationen eines Typs, oder Kationen unterschiedlicher Typen zum Einsatz kommen können.

Bevorzugt ist die zeolithische Gerüststruktur in den Kristallen des Zeolithmaterials oder des zeolithähnlichen Materials in der Beschichtung des erfindungsgemäß bereitgestellten Kompositmaterials und in den Ausgangskristallen aus tetraedrischen $SiO_2$-Einheiten aufgebaut, wobei Siliciumatome in der Gerüststruktur durch eines oder mehrere andere netzwerkbildende Elemente ausgewählt aus Elementen der Hauptgruppen 3, 4 und 5 des Periodensystems ersetzt sein können (Gruppen 13, 14 und 15 nach aktueller IUPAC Klassifikation). Bevorzugt handelt es sich bei den anderen netzwerkbildenden Elementen um eines oder mehrere Elemente ausgewählt aus Bor, Aluminium, Phosphor und Titan. Stärker bevorzugt ist die zeolithische Gerüststruktur aus tetraedrischen $SiO_2$-Einheiten aufgebaut, wobei Siliciumatome in der Gerüststruktur durch Aluminium ersetzt sein können, oder sie ist ausschließlich aus $SiO_2$-Einheiten aufgebaut. Typischerweise sind nicht mehr als 30%, bevorzugt nicht mehr als 20% und stärker bevorzugt nicht mehr als 10% aller Siliciumatome in der zeolithischen Gerüststruktur durch andere Elemente ersetzt. Dabei bezieht sich der Prozentsatz auf die Anzahl aller netzwerkbildenden Atome, und damit aller tetraedrisch koordinierten Positionen in der zeolithischen Gerüststruktur, als 100%.

Die Kationen zum Ladungsausgleich evtl. in der Gerüststruktur vorhandener Formalladungen sind bevorzugt ausgewählt aus Alkali-, Erdalkali- oder Ammoniumkationen. Ein charakteristisches Merkmal von Zeolithen oder einem zeolithischen Material ist die Mobilität bzw. die Austauschbarkeit der Kationen.

Wie vorstehend erwähnt, wird die zeolithische Gerüststruktur der Kristalle des Zeolithmaterials oder zeolithischen Materials in der Beschichtung und den Ausgangskristallen bevorzugt durch verknüpfte $SiO_2$ Tetraeder (auch bezeichnet als $SiO_{4/2}$) oder durch verknüpfte $SiO_2$ und $AlO_2$ (auch bezeichnet als $SiO_{4/2}$ und $AlO_{4/2}$) Tetraeder gebildet. Obwohl eine gewisse Menge der Si-Atome durch andere tetravalente Atome ersetzt sein kann, und/oder eine gewisse Menge der Al-Atome durch andere trivalente Atome ersetzt sein kann, ist es stärker bevorzugt dass die Gerüststruktur aus den $SiO_2$ und $AlO_2$-Tetraedern, oder nur aus $SiO_2$-Tetraedern besteht, so dass es sich um Kristalle eines Zeolithmaterials handelt. Die Struktur eines Zeolithmaterials mit einem solchen Zeolithgerüst kann mit der Formel $M_{x/n}[(AlO_2)_x(SiO_2)_y]$ oder $M_{x/n}[(AlO_2)_x(SiO_2)_y] \cdot z\,H_2O$ wiedergegeben werden. Darin steht M für einen oder mehrere Typen von Kationen mit der Valenz oder der Ladung n (z.B. Alkali- und/oder Erdalkalikationen, so dass n typischerweise 1 oder 2 ist, und bei Vorliegen von Alkali- und Erdalkalikationen auch Werte zwischen 1 und 2 annehmen kann), und $z\,H_2O$ steht für Wassermoleküle, die in den Poren des Zeolithgerüsts adsorbiert sein können. Die Variablen x und y stehen für den Anteil der neutralen $SiO_2$-Tetraeder, und der negativ geladenen $AlO_2$-Tetraeder.

Erfindungsgemäß geeignete Zeolithmaterialien umfassen reine Silikatvarianten, die kein Al enthalten bzw. bei denen x in der vorstehend genannten Formel gleich 0 ist. Geeignete Zeolithmaterialien, die Si und Al enthalten, weisen typischerweise ein Molverhältnis Si/Al (und insbesondere das Verhältnis y/x in der vorstehenden Formel) von mindestens 1 auf, z.B. beträgt das Molverhältnis bei einem hochsilikatischen Zeolithmaterial bevorzugt mindestens 3,5, stärker bevorzugt mindestens 10, und insbesondere mindestens 15.

Auch als zeolithähnliche Materialien werden bevorzugt Materialien eingesetzt, bei denen das molare Verhältnis der tetraedrisch koordinierten Si-Atome zur Summe der anderen ggf. vorhandenen tetraedrisch koordinierten netzwerkbildenden Atome, wie Bor, Aluminium, Phosphor oder Titan, in der zeolithischen Gerüststruktur mindestens 1 beträgt. Beispielhaft können auch hier hochsilikatische Materialien genannt werden. Generell sind die hochsilikatischen Zeolithmaterialien oder zeolithischen Materialien dadurch gekennzeichnet, dass das molare Verhältnis der tetraedrisch koordinierten Si-Atome zur Summe der anderen ggf. vorhandenen tetraedrisch koordinierten netzwerkbildenden Atome, wie Bor, Aluminium, Phosphor oder Titan in der zeolithischen Gerüststruktur bevorzugt mindestens 3,5, stärker bevorzugt mindestens 10, und insbesondere mindestens 15 beträgt.

Wie dem Fachmann geläufig ist, bilden Zeolithmaterialien je nach Wahl der Gerüstbestandteile und der Synthesebedingungen charakteristische Gerüststrukturen, für die bestimmte Typenbezeichnungen etabliert sind. Beispiele von hochsilikatischen Zeolithmaterialien, die in der Beschichtung enthalten sein können, sind die vom MFI-, BEA-, MOR-, FER-, MWW-, MTW-, DDR-, CHA-, AEI- oder MEL- Struktur-Typ. Besonders bevorzugt als hochsilikatische Zeolithmaterialien sind Zeolithmaterialien vom Typ MFI und BEA. Beispiele von aluminiumreichen Zeolithmaterialien, die in der Beschichtung enthalten sein können, sind Zeolith A, X oder Y, die auch als LTA bzw. FAU abgekürzt werden.

Die Beschichtung im erfindungsgemäß hergestellten Kompositmaterial kann mehr als ein Zeolithmaterial oder zeolithähnliches Material enthalten, z.B. können zwei unterschiedliche Zeolithmaterialien, zwei unterschiedliche zeolithähnliche Materialien, oder ein Zeolithmaterial und ein zeolithähnliches Material kombiniert sein. Bevorzugt ist ein genau ein Zeolithmaterial oder genau ein zeolithähnliches Material, insbesondere bevorzugt genau ein Zeolithmaterial, enthalten.

Wie vorstehend erwähnt, kann die Beschichtung im erfindungsgemäß hergestellten Kompositmaterial neben den Kristallen eines Zeolithmaterials oder eines zeolithähnlichen Materials noch eine oder mehrere weitere Aktivkomponenten umfassen. Als Beispiele für weitere Aktivkomponenten können z.B. Metalle, insbesondere Metalle bzw. Übergangsmetalle wie Fe, Co, Ni, Mo, Zn, Ti, Cu, Ru, Rh, Pd oder Pt, genannt werden. Sie können z.B. in Form Metallpartikeln vorliegen. Solche Partikel, falls vorhanden, sind bevorzugt Nanopartikel mit einer Größe, z.B. mit Hilfe von elektronenmikroskopischen Aufnahmen bestimmt, von weniger als 1 $\mu$m, besonders bevorzugt 200 nm oder kleiner, und insbesondere bevorzugt 100 nm oder kleiner. Typischerweise ist die Größe 20 nm oder größer, bevorzugt 30 nm oder größer. Andere Beispiele für weitere Aktivkomponenten sind Metallverbindungen, z.B. Verbindungen der vorstehend beispielhaft genannten Metalle bzw. Übergangsmetalle, wie beispielsweise Oxide oder Sulfide. Auch Metall- bzw. Übergangsmetallverbindungen können beispielsweise in Form von Metallpartikeln, wie den vorstehend genannten Nanopartikeln, in die Beschichtung aufgenommen werden.

Wie vorstehend erwähnt, kann die Beschichtung im erfindungsgemäß hergestellten Kompositmaterial neben den Kristallen eines Zeolithmaterials noch eine oder mehrere inerte Materialien umfassen. Solche Materialien können vom Fachmann je nach der geplanten Anwendung des Kompositmaterials geeignet gewählt werden. Wie für den Fachmann geläufig, bezeichnet der Begriff "inert" hier Materialien, die sich bei dieser Anwendung inert verhalten. Bevorzugt ist die bereit gestellte Beschichtung jedoch frei von solchen inerten Materialien. Eine derartiges Einbringen von inerten Materialien kann beispielsweise dann sinnvoll sein, wenn die Aktivität der aktiven Spezies hoch ist und eine lokale Verdünnung zur Steuerung z.B. der Wärmezu- oder -abfuhr erforderlich ist. Dennoch kann bei Einsatz des erfindungsgemäßen Verfahrens die lokale intensive Vermischung und räumliche Nähe der aktiven Spezies einer bi- oder multifunktionalen Kombination der aktiven Bestandteile aufrecht erhalten werden.

Die Kristalle des Zeolithmaterials oder des zeolithähnlichen Materials bilden bevorzugt die Hauptkomponente der Beschichtung im erfindungsgemäß hergestellten Kompositmaterial, d.h. sie liegen in einem Anteil von 50 Gew.% oder mehr, stärker bevorzugt 80 Gew.% oder mehr, insbesondere bevorzugt 90 Gew.% oder mehr, und ganz besonders bevorzugt 100 Gew.%, bezogen auf das Gesamtgewicht der Beschichtung, vor. Dabei beinhaltet der Gewichtsanteil des Zeolithmaterials oder des zeolithähnlichen Materials auch evtl. darin enthaltene Gastmoleküle und/oder im Hinblick auf die Ladungsneutralität notwendige Kationen.

Bei den Kristallen des Zeolithmaterials oder des zeolithähnlichen Materials der Beschichtung im erfindungsgemäß hergestellten Kompositmaterial handelt es sich typischerweise, wie bei den Ausgangskristallen, um nanoskalige Kristalle. Die Kristallgröße, z.B. bestimmt mit Hilfe von elektronenmikroskopischen Aufnahmen, ist nicht ausschließend aber doch bevorzugt kleiner als 1 $\mu$m, besonders bevorzugt 200 nm oder kleiner, und insbesondere bevorzugt 100 nm oder kleiner. Typischerweise ist die Größe 20 nm oder größer, bevorzugt 30 nm oder größer.

Die Kristallgrößenbestimmung kann beispielsweise mittels Bildanalyse rasterelektronenmikroskopischer Aufnahmen erfolgen. Hierfür kann das Konzept des äquivalenten Durchmessers einer projektionsflächengleichen Kugel angewendet werden.

Dafür werden die Projektionsflächen $A_{proj}$ von N Kristallen auf den REM-Aufnahmen mittels einer geeigneten Bildanalysesoftware (beispielsweise "ImageJ"; vgl. Rasband, W.S., ImageJ, U. S. National Institutes of Health, Bethesda, Maryland, USA, http://imagej.nih.gov/ij/, 1997-2015) ermittelt (hier: Kristallprojektionen angenähert als Elipsen) und gemäß folgender Gleichung der äquivalente Kugeldurchmesser berechnet:

$$d_{eq} = \sqrt{\frac{A_{proj}}{\pi}}$$

Aus den so erhaltenen N Äquivalentdurchmessern lässt sich auch die Größensummenverteilung Q bzw. Größendichteverteilung q bestimmen, und der entsprechende Durchschnittsdurchmesser $d_{eq,mean}$ berechnen und angeben. Soweit nicht anders angegeben, ist als Kristallgröße der mittlere Äquivalentdurchmesser der Kristalle angegeben. Bevorzugt liegt der Äquivalentdurchmesser aller Kristalle innerhalb der vorstehend angegebenen Größenbereiche bzw. bevorzugten Größenbereiche.

Zu bemerken ist hierbei, dass die auf den REM-Aufnahmen als einzelne Kristalle erkennbaren Partikel kristallographisch gesehen aus mehreren Kristalliten bestehen (können). Die Größe dieser identisch aufgebauten, kohärenten Kristallbereich - Kristallite lässt sich z.B. auf Basis des Röntgendiffraktogramms aus den Halbwertsbreiten der Röntgenreflexe abschätzen.

Die Kristalle des Zeolithmaterials oder zeolithähnlichen Materials in der Beschichtung des erfindungsgemäß bereit gestellten Kompositmaterials weisen typischerweise eine mikroporöse Gerüststruktur auf. Wie für zeolithische Strukturen charakteristisch, bilden die Mikroporen der Gerüststruktur ein Porensystem miteinander verbundener Mikroporen. Soweit nicht im Einzelfall anders erläutert, erfolgt die Bezugnahme auf Mikroporen auf Grundlage der IUPAC-Konvention, wobei als Mikroporen Poren mit einem Porendurchmesser $d_P$ bis < 2 nm bezeichnet werden, als Mesoporen Poren mit einem Durchmesser $d_P$ von 2 bis 50 nm und als Makroporen Poren mit einem Durchmesser von über 50 nm) [Haber et al. IUPAC, Pure and Appl. Chem., 63 (1991) 1227]. Die Porendurchmesser können beispielsweise mit Hilfe Sorptionsverfahren mittels Gasen bestimmt werden.

Als Ergebnis des erfindungsgemäßen Herstellungsverfahrens sind die Kristalle des Zeolithmaterials oder zeolithähnlichen Materials in der Beschichtung des bereit gestellten Kompositmaterials so angeordnet, dass die Zwischenräume zwischen den Kristallen die interkristallinen Meso- und/oder Makroporen der Beschichtung bilden. Wie vorstehend erläutert, richtet sich die Bezeichnung nach der IUPAC-Konvention, d.h. als Mesoporen werden Poren mit einem Porendurchmesser $d_P$ von 2 bis 50 nm und als Makroporen Poren mit einem Durchmesser von über 50 nm bezeichnet. Typischerweise liegen die Kristalle des Zeolithmaterials oder zeolithähnlichen Materials in der Beschichtung des bereit gestellten Kompositmaterials so vor, dass sie z.B. in elektronenmikroskopischen Aufnahmen der Beschichtung noch als einzelne Kristalle erkennbar sind, die sich jedoch vorzugsweise berühren oder besonders bevorzugt miteinander verwachsen sind.

Damit gelingt es mit dem erfindungsgemäßen Verfahren, ein Kompositmaterial mit kontrolliert hierarchischer Porosität bereit zu stellen. Vorhandene Mikroporen werden durch den Typ des eingesetzten Zeolithmaterials oder zeolithähnlichen Materials definiert, Meso- und/oder Makroporen z.B. durch die Menge und Größe der Kristalle des Zeolithmaterials oder zeolithähnlichen Materials und deren resultierende Anordnung beim Beschichten.

Die Dicke der Beschichtung kann über weite Bereiche nach Bedarf eingestellt werden, ggf. auch durch mehrfaches Beschichten. Typischerweise liegt die Dicke der Beschichtung in einem Bereich von 20 nm bis bis 200 $\mu$m. Die Dicke kann z.B. mittels Querschnitts-Bildanalyse, typischerweise mit Hilfe einer REM-Aufnahme bestimmt werden.

Zur Herstellung des Kompositmaterials wird zunächst in Schritt a) eine Suspension bereit gestellt, die nanoskalige Ausgangskristalle aus einem Zeolithmaterial oder einem zeolithähnlichen Material, sowie Vorläuferverbindungen des Zeolithmaterials oder zeolithähnlichen Materials enthält. Nanoskalige Ausgangskristalle aus einem Zeolithmaterial sowie Vorläuferverbindungen des Zeolithmaterials sind enthalten. Wie für den Fachmann verständlich, sind die Vorläuferverbindungen in der Suspension typischerweise so gewählt, dass mit ihrer Hilfe ein Zeolithmaterial oder zeolithähnliches Material gebildet werden kann, dessen Zusammensetzung dem in der Suspension enthaltenen Material entspricht.

Die Kristallgröße der nanoskaligen Ausgangskristalle, z.B. bestimmt anhand von elektronenmikroskopischen Aufnahmen wie vorstehend für die Kristalle der Beschichtung erläutert, ist bevorzugt kleiner als 1 $\mu$m, besonders bevorzugt 200 nm oder kleiner, und insbesondere bevorzugt 100 nm oder kleiner. Typischerweise ist die Größe 20 nm oder größer, bevorzugt 30 nm oder größer. Die Werte sind vorzugsweise jeweils als mittlerer Äquivalentdurchmesser angeben. Stärker bevorzugt liegt der Äquivalentdurchmesser aller Kristalle innerhalb der vorstehend angegebenen Größenbereiche bzw. bevorzugten Größenbereiche.

Hinsichtlich der Zusammensetzung der Ausgangskristalle aus einem Zeolithmaterial oder einem zeolithähnlichen Material, bevorzugt aus einem Zeolithmaterial, gelten die Erläuterungen, die vorstehend in Bezug auf die Zusammensetzung sowohl der Ausgangskristalle als auch der Kristalle des Zeolithmaterials oder zeolithähnlichen Materials in der bereitgestellten Beschichtung gemacht wurden. Typischerweise entspricht die Zusammensetzung der Ausgangskristalle derjenigen der Kristalle des Zeolithmaterials oder zeolithähnlichen Materials in der bereitgestellten Beschichtung.

Vorläuferverbindungen von Zeolithmaterialien oder zeolithähnlichen Materialien, wie sie in der in Schritt a) bereit gestellten Suspension enthalten sind, sind dem Fachmann ebenfalls geläufig. Es handelt sich dabei typischerweise um Verbindungen von netzwerkbildenden Elementen, die im Lösungsmittel, das die flüssige Phase der Suspension bildet, gelöst oder in kolloidaler Form oder als amorpher Feststoff suspendiert sind. Typische netzwerkbildende Elemente, deren Oxide zur Bereitstellung von Zeolithmaterialien und zeolithähnlichen Materialien geeignet sind, sind Elemente der 3, 4 und 5 Hauptgruppe des Periodensystems (Gruppen 13, 14 und 15 nach aktueller IUPAC Klassifikation). Bevorzugte Beispiele sind eines oder mehrere Elemente, ausgewählt aus Si, Al, P, B, Ti, oder Ga, stärker bevorzugte Beispiele sind Si und Al.

Beispiele von geeigneten Verbindungen dieser netzwerkbildenden Elemente sind Salze, einschließlich Metallate, Hydroxide oder Alkoxide. Spezifische beispielhafte Siliciumverbindungen, die als Vorläuferverbindungen geeignet sind, sind Kieselsäuren, Salze der Kieselsäure oder Kieselsäureester (wie z.B. Tetraethylorthosilikat). Der Begriff der Kieselsäure umfasst dabei sowohl die Orthokieselsäure als auch oligomere und/oder feste Polykondensationsprodukte davon, wie Kieselgele, Fällungskieselsäuren oder Aerosil. Beispielhafte Aluminiumverbindungen, die als Vorläuferverbindungen geeignet sind, sind Aluminiumsalze wie Aluminiumnitrat, Aluminate wie z.B. Alkalialuminate, Aluminiumalkoholate wie z.B. Aluminiumtriisopropylat, oder Aluminiumhydrate, wie z.B. Aluminiumtrihydrat. Beispielhafte Titanverbindungen sind Titansalze, Titanate, Titantetraethanolat, Titanalkoxyverbindungen, wie Titanisopropoxid. Beispielhafte Phosphorverbindungen sind Phosphate und Phosphorsäureester. Beispielhafte Borverbindungen sind Borsäure, Borate oder Borsäureester, wie z.B. Triethylborat oder Trimethylborat.

Neben den Ausgangskristallen und den Vorläuferverbindungen enthält die in Schritt a) bereit gestellte Suspension bevorzugt eine Templatspezies, d.h. eine Substanz, die als Templat für die Synthese einer zeolithischen Gerüststruktur wirken kann. Bevorzugt handelt es sich dabei um eine organische Verbindung.

Geeignete organische Verbindungen, auch als organische Template oder als strukturdirigierende Substanzen bezeichnet, sind dem Fachmann bekannt. Es handelt sich dabei in der Regel um Alkohole, Phosphorverbindungen, Amine oder. Ammoniumverbindungen, bevorzugt um Tetraorganoammonium-Kationen oder Tetraorganophosphonium-Kationen, die typischerweise in Form ihrer Salze eingesetzt werden, wie z.B. als Halogenide oder Hydroxide.

Stärker bevorzugt handelt es sich um Tetraorganoammonium-Kationen oder Tetraorganophosphonium-Kationen, die vier Kohlenwasserstoffreste tragen, insbesondere Kohlenwasserstoffreste die unabhängig voneinander ausgewählt sind aus Alkylresten, Arylresten und Alkarylresten. Bevorzugt handelt es sich bei den Alkylresten um C1-C4 Alkylreste. Als Arylrest ist der Phenylrest bevorzugt, und als Alkarylrest der Benzylrest. Besonders bevorzugt kommen als Tetraorganoammonium-Kationen Tetraalkylammonium-Kationen zum Einsatz, wie das Tetramethylammonium-Kation, z.B. in Form von Tetramethylammoniumhydroxid, das Tetraethylammonium-Kation, z.B. in Form von Tetraethylammoniumhydroxid, das Tetrapropylammonium-Kation, z.B. in Form von Tetrapropylammoniumhydroxid, das Tetrabutylammoniumkation, oder das Triethylmethylammoniumkation. Weitere bevorzugte Beispiele für sind das Tetrabutylphosphium-Kation, das Triphenylbenzylphosphoniumkation oder das Trimethylbenzylammoniumkation. Daneben sind z.B. auch primäre, sekundäre oder cyclische Amine (wie Piperidin), Imine (wie Hexamethylenimin) oder Alkohole als organische Templatspeizes einsetzbar.

Die folgende Tabelle gibt eine nicht einschränkende Übersicht über gängige organische Verbindungen als Templatespezies und die unter ihrer Verwendung erhältlichen zeolithischen Gerüststrukturen:

| Organische Moleküle | Zeolithe (Netzwerktyp) |
|---|---|
| TMA - (Tetramethylammonium) | X (FAU), Sodalith (SOD), ZSM-10 (MOZ), ZSM-3 (EMT-FAU), ZSM-5 (MFI), ZSM-11 (MEL), ZSM-39 (MTN) |
| TEA - (Tetraethylammonium)$^+$ | ZSM-5 (MFI), ZSM-11(MEL), SAPO-34 (CHA), UZM-5 (UFI), ZSM-20 (EMT-FAU), ZSM-12 (MTW), Beta (BEA) |
| TBP - (Tetrabutylphosphonium)$^+$ | ZSM-5 (MFI), ZSM-11 (MEL) |
| TPA - (Tetrapropylammonium)$^+$ | ZSM-5 (MFI), AlPO$_4$-5 (AFI), ZETA-1, ZETA-3 |
| TPBP - (Triphenylbenzylphosphonium)$^+$ | ZSM-11 (MEL) |
| TMBA - (Trimethylbenzylammonium)$^+$ | ZSM-11 (MEL) |
| TBA - (Tetrabutylammonium)$^+$ | ZSM-5 (MFI), ZSM-11 (MEL) |
| TEMA - (Triethylmethylammonium)$^+$ | ZSM-12 (MTW) |
| Primär-und Sekundäramine | ZSM-5 (MFI), ZSM-22 (TON), ZSM-35 (FER) |
| Piperidin | Ferrierite (FER) |
| HMI - (Hexamethylenimin) | PSH-3 (MWW), ZSM-5 (MFI), SAPO-35 (LEV) |
| Alkohole | ZSM-5 (MFI) |

Falls die Anwesenheit einer weiteren Aktivkomponente in der Beschichtung des Kompositmaterials gewünscht ist, kann diese ebenfalls unmittelbar oder in Form einer Vorläuferverbindung in der in Schritt a) bereit gestellten Suspension enthalten sein. Wie vorstehend erwähnt sind Beispiele geeigneter weiterer Aktivkomponenten Metalle, insbesondere Metalle oder Übergangsmetalle wie Fe, Co, Ni, Mo, Ti, Zn, Cu, Ru, Rh, Pd oder Pt. Sie können in der Suspension beispielsweise in Form von metallischen Nanopartikeln oder in Form einer Metallverbindungen enthalten sein. Metallverbindungen können z.B. in Form eines Oxids oder Sulfids, in Form eines Salzes eines entsprechenden Metallkations oder in Form einer Komplexverbindung eines entsprechenden Metalls eingebracht werden.

Falls gewünscht, kann die Suspension darüber hinaus auch andere, z.B. inerte Materialien enthalten, die in der Beschichtung des erfindungsgemäß bereit gestellten Kompositmaterials enthalten sein sollen. Bevorzugt ist die Suspension, und auch die bereit gestellte Beschichtung, jedoch frei von solchen inerten Materialien.

Auch Additive, die die Verarbeitung der Suspension erleichtern, können zum Einsatz kommen, wie z.B. ein Dispergiermittel. Wie vorstehend erwähnt ist die Suspension jedoch typischerweise frei von einem Bindermaterial oder Bindemittel.

Das Lösungsmittel, das die flüssige Phase der Suspension bildet, kann ein einzelnes Lösungsmittel oder eine Mischung von zwei oder mehr Lösungsmitteln sein. Aus Gründen der Kosteneffizienz und der Umweltverträglichkeit eignet sich besonders Wasser als Lösungsmittel.

Um die Suspension in Schritt a) bereit zu stellen (nicht-erfindungsgemäß) können die nanoskaligen Ausgangskristalle, die Vorläuferverbindung, bevorzugt zusätzlich die Templatspezies, und weitere optionale Bestandteile in beliebiger Reihenfolge dem Lösungsmittel zugegeben werden. Gemäß der vorstehend diskutierten erfindungsgemäßen Ausführungsform des Verfahrens wird die Suspension bereitgestellt, indem in Schritt a) die Ausgangskristalle durch teilweises Umsetzen eines Reaktionsgemischs synthetisiert werden, das (i) ein Lösungsmittel, und (ii) die Vorläuferverbindungen des Zeolithmaterials oder zeolithähnlichen Materials, sowie bevorzugt weiter (iii) eine Templatspezies enthält. Als Ergebnis erhält man die Suspension, die die nanoskaligen Ausgangskristalle aus einem Zeolithmaterial oder einem zeolithähnlichen Material, Vorläuferverbindungen des Zeolithmaterials oder zeolithähnlichen Materials, sowie bevorzugt weiter eine Templatspezies enthält. Die so bereitgestellte Suspension wird in Schritt b) mit den darin enthaltenen Ausgangskristallen und nicht umgesetzten Vorläuferverbindungen ohne vorheriges Isolieren der synthetisierten Ausgangskristalle auf die Oberfläche der Trägerstruktur aufgetragen.

Üblicherweise ist die Feststoffkonzentration in typischen Suspensionen bevorzugt nicht größer als 30 % (Gew./Gew.), stärker bevorzugt nicht größer als 20 %. Beispielsweise kann die Feststoffkonzentration im Bereich von 10 bis 30 % (Gew./Gew.) liegen. Dabei bezeichnet der Begriff der Feststoffkonzentration die Gesamtkonzentration aller Materialien (insbesondere die nanoskaligen Ausgangskristalle und Vorläuferverbindungen des Zeolithmaterials oder zeolithähnlichen Materials, aber auch weitere optionale Aktivkomponenten, die später als Feststoff in der Beschichtung des Kompositmaterials vorliegen. Die Konzentrationen weiterer Bestandteile (z.B. Hilfsbestandteile wie Templatspezies) können entsprechend der gewünschten Struktur in der Beschichtung angepasst werden).

Daraus ergibt sich als bevorzugte Variante der Erfindung ein Verfahren zum Erzeugen eines Kompositmaterials mit einer Trägerstruktur und einer Beschichtung auf der Oberfläche der Trägerstruktur, wobei die Beschichtung als Aktivkomponente Kristalle eines Zeolithmaterials oder eines zeolithähnlichen Materials umfasst und wobei in der Beschichtung interkristalline Meso- und/oder Makroporen ausgebildet sind,
dadurch gekennzeichnet, dass das Verfahren die folgenden Schritte umfasst:

a) Bereitstellen einer Suspension, die nanoskalige Ausgangskristalle aus einem Zeolithmaterial oder einem zeolithähnlichen Material, sowie Vorläuferverbindungen des Zeolithmaterials oder zeolithähnlichen Materials enthält, indem die Ausgangskristalle durch teilweises Umsetzen eines Reaktionsgemischs synthetisiert werden, das (i) ein Lösungsmittel, (ii) die Vorläuferverbindungen des Zeolithmaterials oder zeolithähnlichen Materials, sowie (iii) eine Templatspezies enthält,

b) Auftragen der in Schritt a) bereitgestellten Suspension mit den darin enthaltenen Ausgangskristallen und nicht umgesetzten Vorläuferverbindungen ohne vorheriges Isolieren der synthetisierten Ausgangskristalle auf die Oberfläche der Trägerstruktur,

c) Verdichten der in Schritt b) aufgetragenen Suspension durch zumindest teilweises Entfernen des Lösungsmittels, das die flüssige Phase der Suspension bildet, um eine Beschichtung zu erhalten, die die Ausgangskristalle und die Vorläuferverbindungen enthält,

d) Halten der in Schritt c) erhaltenen Beschichtung auf der Oberfläche der Trägerstruktur in einer dampfhaltigen Atmosphäre bei einer erhöhten Temperatur, so dass die enthaltenen Vorläuferverbindungen in ein Zeolithmaterial oder ein zeolithähnliches Material umgewandelt werden und zusammen mit den Ausgangskristallen die Beschichtung bilden, die Kristalle eines Zeolithmaterials oder eines zeolithähnlichen Materials umfasst.

Bei der Synthese der nanoskaligen Ausgangskristalle durch teilweises Umsetzen eines Reaktionsgemischs, das (i) ein Lösungsmittel, und (ii) die Vorläuferverbindungen des Zeolithmaterials oder zeolithähnlichen Materials, sowie bevorzugt weiter (iii) eine Templatspezies enthält, handelt es sich typischerweise um eine Synthese die unter Hydrothermalbedingungen durchgeführt wird, beispielsweise durch Kristallisation der Ausgangskristalle bei einer Temperatur, die in der Regel bei minimal 70 bis maximal 220°C liegt, über einige Stunden bis 5 Tage. Wichtig ist, dass die Vorläuferverbindungen nicht vollständig umgesetzt werden, so dass die gebildete Suspension neben den Ausgangskristallen noch nicht umgesetzte Vorläuferverbindungen enthält. Bevorzugt sollte ein Umsatzgrad von 60 - 80 mol%, bezogen auf die Gesamtmolzahl der netzwerkbildenden Elemente im ursprünglichen Reaktionsgemisch als 100 mol%, erreicht werden, d.h. es wird bevorzugt eine Suspension bereitgestellt, in der 60 - 80 mol% der netzwerkbildenden Elemente in den Vorläuferverbindungen des ursprünglichen Reaktionsgemischs zu nanoskaligen Ausgangskristallen umgesetzt wurden.

In Schritt b) des erfindungsgemäßen Verfahrens wird die in Schritt a) bereit gestellte Suspension auf die Oberfläche der Trägerstruktur aufgetragen. Als Verfahren zum Auftragen sind eine Reihe konventioneller Verfahren verfügbar, wie z.B. Rotationsbeschichten ("Spin-Coating"), Tauchbeschichten ("Dip-Coating"), Aufrakeln oder Aufsprühen. Wie vorstehend erläutert, kann die Suspension so aufgebracht werden, dass die gesamte Oberfläche der Trägerstruktur mit der Suspension bedeckt ist, oder dass die Oberfläche nur teilweise bedeckt ist. Ein lokales Auftragen ist ebenfalls mit Hilfe der vorstehend beispielhaft genannten Verfahren möglich, ggf. unterstützt durch Maskieren von Teilen der Oberfläche, auf die kein Auftrag erfolgen soll.

In Schritt c) erfolgt ein Verdichten der in Schritt b) aufgetragenen Suspension durch zumindest teilweises Entfernen des Lösungsmittels, das die flüssige Phase der Suspension bildet, um eine Beschichtung zu erhalten, die die Ausgangskristalle und die Vorläuferverbindungen enthält. Darüber hinaus enthält die Beschichtung weitere optionale Bestandteile, die vorstehend als optionale Bestandteile der Suspension genannt wurden, insbesondere als bevorzugten weiteren Bestandteil die Templatspezies, die die Steuerung der Strukturbildung für verschiedene Zeolithtypen bzw. zeolithische Gerüststrukturen erlauben.

Das zumindest teilweise Entfernen des Lösungsmittels kann mit bekannten Verfahren erfolgen, z.B. mit Hilfe einer Erhöhung der Temperatur, einer Verringerung des Partialdruckes des Lösungsmittels in der Umgebung der aufgebrachten Suspension, oder Kombinationen daraus. Neben Wärme und/oder Druckreduzierung bzw. Vakuum können auch Verfahren wie Gefriertrocknen zum Einsatz kommen.

Typischerweise werden zum Verdichten der Suspension in Schritt c) mindestens 40 Gew.% des Lösungsmittels, bevorzugt mindestens 50 Gew.% des Lösungsmittels, stärker bevorzugt mindestens 75 Gew.% des Lösungsmittels, und besonders bevorzugt mindestens 85 Gew.% des Lösungsmittels, bezogen auf das Gesamtgewicht des Lösungsmittels in der aufzutragenden Suspension, entfernt. Der Anteil des entfernten Lösungsmittels ist typischerweise jedoch kleiner als 100 Gew.%, so dass eine Restbeladung mit Lösungsmittel in der in Schritt c) erhaltenen Beschichtung erhalten bleibt.

Bei Bedarf, z.B. um die Dicke der Beschichtung anzupassen, können die Schritte b) und c), ggf. auch die Schritte a), b) und c), des erfindungsgemäßen Verfahrens mehrfach, z.B. zweimal oder dreimal, durchlaufen werden, bevor Schritt d) durchgeführt wird.

In Schritt d) des erfindungsgemäßen Verfahrens wird die in Schritt c) erhaltene Beschichtung auf der Oberfläche der Trägerstruktur in einer dampfhaltigen Atmosphäre bei einer erhöhten Temperatur gehalten, um so die Vorläuferverbindungen des Zeolithmaterials oder zeolithähnlichen Materials, die sich in der Beschichtung befinden, in ein entsprechendes Zeolithmaterial oder ein zeolithähnliches Material umzuwandeln. So bilden die umgewandelten Vorläuferverbindungen zusammen mit den Ausgangskristallen die Beschichtung, die Kristalle eines Zeolithmaterials oder eines zeolithähnlichen Materials umfasst.

Typischerweise wächst das bei der Umwandlung in Schritt d) aus den Vorläuferverbindungen gebildete Zeolithmaterial oder zeolithähnliche Material an Ausgangskristalle in der Beschichtung an. Vorzugsweise erfolgt dieses Anwachsen so, dass das zusätzlich aus den Vorläuferverbindungen gebildete Zeolithmaterial oder zeolithähnliche Material die Ausgangskristalle in der Beschichtung verbindet und sich als Ergebnis die Kristalle des Zeolithmaterials oder zeolithähnlichen Materials in der erfindungsgemäßen Beschichtung berühren und besonders bevorzugt miteinander verwachsen sind.

Bei der in Schritt d) eingesetzten dampfhaltigen Atmosphäre handelt es sich typischerweise um eine wasserdampfhaltige Atmosphäre. Allerdings sollte in Schritt d) ein Kontakt der in Schritt c) erhaltenen Beschichtung mit einem flüssigen Lösungsmittel, z.B. flüssigem Wasser, vermieden werden. Der Wasserdampfgehalt der Atmosphäre liegt bevorzugt bei einer relativen Feuchtigkeit von 60 bis 100%, stärker bevorzugt 80 bis 95%.

Die erhöhte Temperatur in Schritt d) liegt bevorzugt im Bereich von 70 bis 200 °C, stärker bevorzugt 100 bis 170°C, und insbesondere bevorzugt 100 bis 160°C.

Nach einer bevorzugten Ausführungsform wird daher in Schritt d) die in Schritt c) erhaltenen Beschichtung auf der Oberfläche der Trägerstruktur in einer wasserdampfhaltigen Atmosphäre bei einer Temperatur von 100 bis 170 °C gehalten, wobei die relative Feuchtigkeit der Atmosphäre jeweils von 60 bis 100 % beträgt.

Die Dauer des Haltens der in Schritt c) erhaltenen Beschichtung in der dampfhaltigen Atmosphäre bei erhöhter Temperatur in Schritt d) kann vom Fachmann in Abhängigkeit vom Typ des Zeolithmaterials oder zeolithähnlichen Materials und von der Temperatur geeignet gewählt werden. Sie liegt in der Regel bei 0,5 bis 192 Stunden, bevorzugt, z.B. für ein Zeolithmaterial vom Typ ZSM-5 (MFI-Typ), typischerweise bei 2 bis 96 h, stärker bevorzugt 10 bis 72 h.

Das Halten der in Schritt c) erhaltenen Beschichtung in der dampfhaltigen Atmosphäre bei erhöhter Temperatur in Schritt d) kann in einem offenen System unter atmosphärischem Druck stattfinden, so dass die Partialdrücke der dampfförmigen Substanzen durch ihren Gehalt in der Umgebungsluft bestimmt werden.

Bevorzugt findet das Halten der in Schritt c) erhaltenen Beschichtung in der dampfhaltigen Atmosphäre bei erhöhter Temperatur in Schritt d) in einem geschlossenen System, z.B. in einem Autoklaven, statt, um so die Zusammensetzung der dampfhaltigen Atmosphäre gut kontrollieren zu können. Der Druck im geschlossenen System kann dabei prinzipiell unterhalb von, oberhalb von oder bei Atmosphärendruck liegen. Bei durchführen des Schritts d) in einer wasserdampfhaltigen Atmosphäre bei Temperaturen bei oder über 100 °C liegt der Druck typischerweise oberhalb des Atmosphärendrucks.

Der Druck und dadurch auch die Partialdrücke der dampfförmigen Komponenten in der Atmosphäre beim Halten der in Schritt c) erhaltenen Beschichtung auf der Oberfläche der Trägerstruktur bei einer erhöhten Temperatur kann beispielsweise autogen über das Phasengleichgewicht oder die Phasengleichgewichte der vorhandenen Spezies bei der gewählten Temperatur, oder durch eine oder mehrere interne oder externe Regeleinrichtungen oder Regelvorkehrungen gezielt eingestellt werden. Beispielsweise kann eine Regeleinrichtung oder Regelvorkehrung eingesetzt werden, die apparativer, physikalischer oder chemischer Natur ist, oder eine Kombination aus diesen. Kommt in Schritt d) eine wasserdampfhaltige Atmosphäre zum Einsatz, so kann beispielsweise das beschichtete Trägermaterial in einem geschlossenen System bei einer erhöhten Temperatur gehalten werden, dem flüssiges Wasser zugegeben wurde. Als Möglichkeiten zum gezielten Einstellen der Wasserdampfpartialdrucks können z.B. Substanzen genannt werden, die in der Lage sind, Wasser reversibel zu binden, wie z.B. Salze beziehungsweise deren Hydrate, oder Kieselgel.

Im Anschluss an Schritt d) können bei Bedarf noch zusätzliche Nachbehandlungsschritte durchgeführt werden.

Insbesondere bei Einsatz einer organischen Verbindung als Templatspezies in der in Schritt a) bereit gestellten Suspension kann es z.B. wünschenswert sein, im Anschluss an Schritt d) noch vorhandene Templatspezies durch eine Nachbehandlung, vorzugsweise eine thermische Nachbehandlung, aus dem erhaltenen Kompositmaterial zu entfernen.

Andere dem Fachmann geläufige Nachbehandlungsschritte für ein Kompositmaterial, das als Aktivkomponente ein Zeolithmaterial order zeolithähnliches Material enthält, sind beispielsweise einer oder mehrere Schritte, ausgewählt aus Kalzination, Extraktion, thermische Behandlung, Laugung, Dampfbehandlung, Säurebehandlung, Ionenaustausch und mechanische Formgebung.

**Beispiel**

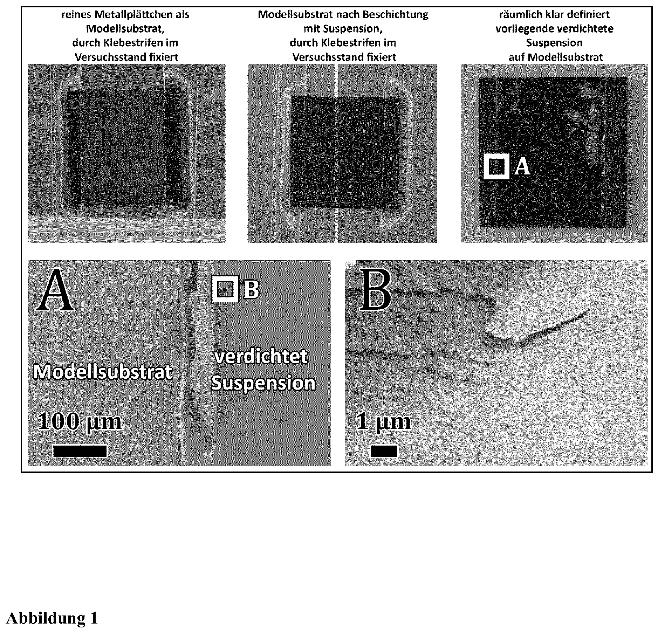

Abbildung 1 bis Abbildung 3 zeigen Ausführungsbeispiele des erfindungsgemäßen Verfahrens am Beispiel von planaren Trägersystemen. Dafür wurde ausgegangen von planaren Metallplättchen (12 x 12 mm) als Modellsubstrat für die geträgerte Verdichtung und Umwandlung einer wässrigen Suspension bestehend aus (i) nanoskaligem Zeolith Silikalith-1 (rein $SiO_2$-basierter Zeolith der MFI-Topologie) und (ii) nicht kristallisierte Netzwerkbildner (amorphe $SiO_2$-Spezies und/oder gelöste $SiO_2$-Spezies) sowie (iii) nicht umgesetzte Templatmoleküle.

Gemäß Schritt a) wurde eine Supension, die das nanoskalige Zeolithmaterial, die Vorläuferverbindung des Zeolithmaterials, sowie eine Templatspezies enthält wie folgt hergestellt:

Zunächst wurde das Templat (Tetrapropylammonium Hydroxid, "TPAOH", 40wt.% in Wasser) und deionisiertes Wasser in einem 500 mL Erlenmayerkolben gemischt, wobei die Mengen gemäß eines molaren Verhältnisses von TPAOH : $H_2O$ = 1 : 53,33 eingestellt wurden. Diese Lösung wurde bei 400 rpm mittels eines Rührfisches für wenige Minuten ($\leq$ 10 Minuten) gerührt. Zu dieser Lösung wurde unter weiterem rühren Tetraethylorthosilikat ("TEOS", Alfa Aesar, 98%) mit circa 1 Tropfen je Sekunde zugetropft. Die Menge an TEOS wurde dabei so eingestellt, dass die letztendliche Lösung die folgende molare Zusammensetzung an Netzwerkbildner (Silizium via TEOS), Templat und Wasser aufwies: Si : TPAOH : $H_2O$ = 1 : 0,36 : 19,2. Diese Lösung wurde für weitere 48 Stunden bei Raumtemperatur unter unveränderter Rührgeschwindigkeit im nun verschlossenen Erlenmayerkolben gerührt. Unter Berücksichtigung der Hydrolyse von TEOS lag demnach in der üblichen Oxidschreibweise nach o.g. Zeit eine sog. Synthesemischung mit folgenden molaren Verhältnissen vor: 1 $SiO_2$ : 0,18 $TPA_2O$ : 19,2 $H_2O$ : 4 Ethanol, die einen pH-Wert von 12,6 aufwies. Diese Synthesemischung wurde in einen Edelstahl-Autoklaven mit PTFE-Einsatz (45 mL, Parr Instrument) überführt. In einem Ofen (90 °C) mit Umluftfunktion erfolgte für 49 Stunden so bei 90 °C die hydrothermale Kristallisation des kristallinen Zeolithen. Nach den Synthesezeit von 49 Stunden wurden die Autoklaven aus dem Ofen entnommen und auf Raumtemperatur abgekühlt. Die milchige Suspension bestehend aus den zeolithischen Nanokristallen, den nicht umgesetzten Silikaspezies und den Resten an Templat wurde direkt für eine Sprühbeschichtung (Schritt b) genutzt.

Die Sprühbeschichtung erfolgte mittels einer handelsüblichen Sprühpistole. Als Modellsubstrate dienten zwei Edelstahlplättchen (12 x 12 mm) und bei identischen Umgebungsbedingungen (Raumtemperatur, atmosphärischer Druck) eingetrocknet (Schritt c): "Verdichtung") wodurch jeweils eine makroskopisch trockene Schicht entstand (vgl. Abbildung 1).

Anschließend erfolgte die Umwandlung der in der verdichteten Schicht enthaltenen Vorläuferverbindungen (Schritt d)) in jeweils einem gesonderten geschlossenen System. Dafür wurden die beschichteten Modellsubstrate nach oben beschriebenem Verdichtungsschritt in einer Wasserdampfatmosphäre in einem geschlossenen System (ebenfalls 45 ml-Autoklaven mit PFTFE-Einsatz der Firma Parr bei 155° C für 66 Stunden gehalten. Praktisch wurde das Halten realisiert durch einen PTFE-Abstandshalter mit PTFE-Trägerplatte, worauf das jeweilige beschichtete Modellsubstrat mit der Beschichtung nach oben zeigend platziert wurde.

Das Wasser für die Einstellung einer Dampfatmosphäre für die Umwandlung wurde über die Zugabe von reinem Wasser (Versuch V1) sowie durch die Zugabe von Kieselgel (Versuch V2, Mischung aus 50 Gew.-% beladenem und 50 Gew.-% aktiviertem Kieselgel bezogen auf die Masse im wasserfreien Zustand) am Boden des PTFE-Einsatzes bereitgestellt, so dass der PTFE-Abstandshalter das Modellsubstrat und das Wasser (V1) bzw. das Modellsubstrat und die Kieselgelmischung (V2) räumlich voneinander trennte und kein direkter Kontakt möglich war.

In beiden Fällen V1 und V2 befand sich eine ausreichende Menge an $H_2O$ um bei 155°C im geschlossenen System eine relative Feuchte von 100 % einzustellen, jedoch ist in Versuch V2 durch die Wassersorptions-Charakteristika des Kieselgels ein niedrigeres Niveau des Wasserdampfpartialdruckes im geschlossenen System zu erwarten, besonders während der Aufheiz- und Abkühlphase, aber auch während der isothermen Phase bei 155 °C, die Kieselgelmischung dient hier zur Kontrolle des Wasserdampfpartialdrucks.

Nach den genannten 66 Stunden des Haltens in einer Dampfatmosphäre wurden die Autoklaven auf Raumtemperatur abgekühlt, die Kompositmaterialien entnommen, mit deionisiertem Wasser überspült und bei 75 °C über Nacht getrocknet.

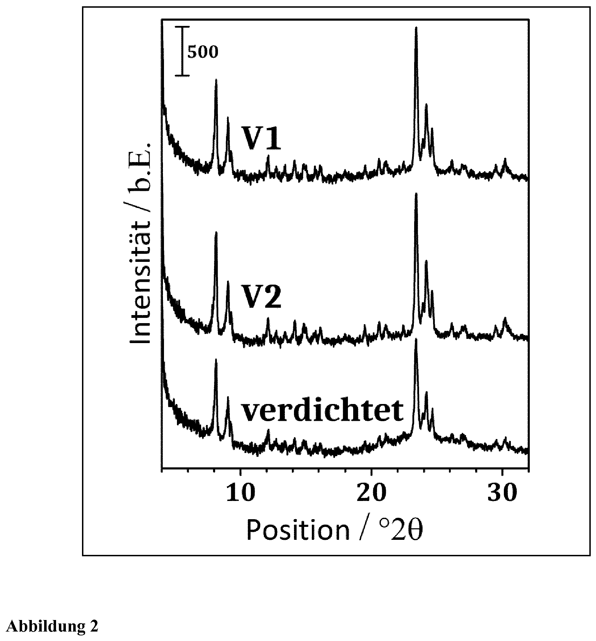

Der Vergleich der beiden so erhaltenen Kompositmaterialien zeigt deutlich, dass in beiden Versuchen ausreichend Wasser zur Verfügung stand um eine vollständige Umsetzung der anfänglich amorphen Netzwerkbildner (Vorläuferverbindung des Zeolithmaterials) zu ermöglichen (siehe Röntgendiffraktogramme in Abbildung 2: Der Erfolg der Umwandlung zeigt sich für beide Proben (V1 und V2) durch eine deutliche Abnahme der amorphen Phase im Vergleich zur verdichteten Suspension während die Intensität der charakteristischen MFI Reflexe deutlich steigt).

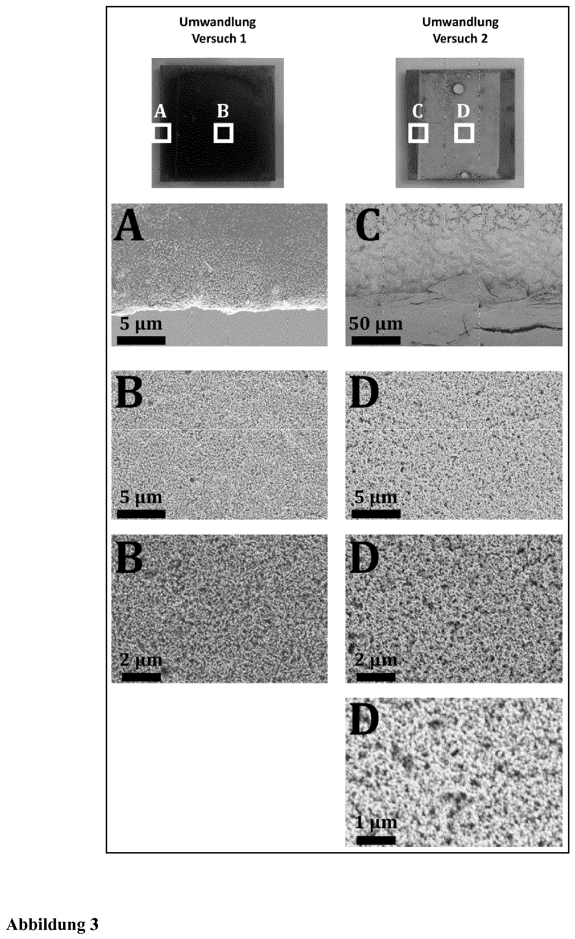

Wie in Abbildung 3 deutlich zu erkennen, zeigen diese Versuche auch, dass es bei hohem Wasserdampfpartialdruck (V1) während der Umwandlung offensichtlich zur Kondensation von Wasser auf dem beschichteten Modellsubstrat kommt, was zum "zerlaufen" der ursprünglich lokal klar definierten Schicht führt. Dieser Effekt ist bei Verwendung des Kieselgels (V2) nicht zu beobachten.

**Abbildung 1:** Fotografien des planaren Modellsubstrates in unbeschichtetem Zustand durch Klebestreifen am Versuchsstand fixiert (oben, links), unmittelbar nach Beschichtung mittels Aufsprühen der Suspension (oben, mitte) und nach Verdichten der Suspension (rechts, Eintrocknen bei atmosphärischen Bedingungen, Klebestreifen hier bereits entfernt). Unten: Raster-elektronenmikroskopische Aufnahmen der verdichteten Suspension auf dem Modellsubstrat (unten links: linke Bildhälfte zeigt deutlich den unbeschichteten Bereich (dort Klebestreifen während der Sprühbeschichtung)). Buchstaben zeigen jeweils den Bereich der Vergrößerung an.

**Abbildung 2:** Röntgendiffraktogramme der verdichteten Suspension auf dem Modellsubstrat ("verdichtet") sowie der, mittels Dampf behandelten verdichteten Suspension gemäß Versuch 1 ("V1") und Versuch 2 ("V2") Schicht auf den Metallplättchen.

**Abbildung 3:** Fotographische Aufnahmen (oben) und rasterelektronenmikroskopische Aufnahmen (unten) der Metallplättchen mit der umgewandelten verdichteten Suspension nach Versuch 1 (links) und nach Versuch 1 (rechts). Buchstaben zeigen jeweils den Bereich der Vergrößerung an.

## Patentansprüche

1. Verfahren zum Erzeugen eines Kompositmaterials mit einer Trägerstruktur und einer Beschichtung auf der Oberfläche der Trägerstruktur, wobei die Beschichtung als Aktivkomponente Kristalle eines Zeolithmaterials oder eines zeolithähnlichen Materials umfasst und wobei in der Beschichtung interkristalline Meso- und/oder Makroporen ausgebildet sind,

   **dadurch gekennzeichnet, dass** das Verfahren die folgenden Schritte umfasst:

   a) Bereitstellen einer Suspension, die nanoskalige Ausgangskristalle aus einem Zeolithmaterial oder einem zeolithähnlichen Material, sowie Vorläuferverbindungen des Zeolithmaterials oder zeolithähnlichen Materials enthält,
   b) Auftragen der in Schritt a) bereitgestellten Suspension auf die Oberfläche der Trägerstruktur,
   c) Verdichten der in Schritt b) aufgetragenen Suspension durch zumindest teilweises Entfernen des Lösungsmittels, das die flüssige Phase der Suspension bildet, um eine Beschichtung zu erhalten, die die Ausgangskristalle und die Vorläuferverbindungen enthält,
   d) Halten der in Schritt c) erhaltenen Beschichtung auf der Oberfläche der Trägerstruktur in einer dampfhaltigen Atmosphäre bei einer erhöhten Temperatur, so dass die enthaltenen Vorläuferverbindungen in ein Zeolithmaterial oder ein zeolithähnliches Material umgewandelt werden und zusammen mit den Ausgangskristallen die Beschichtung bilden, die Kristalle eines Zeolithmaterials oder eines zeolithähnlichen Materials umfasst,

   wobei das Bereitstellen der Suspension in Schritt a) erfolgt, indem die Ausgangskristalle durch teilweises Umsetzen eines Reaktionsgemischs synthetisiert werden, das (i) ein Lösungsmittel, sowie (ii) die Vorläuferverbindungen des Zeolithmaterials oder zeolithähnlichen Materials enthält,

   und wobei die so bereitgestellte Suspension in Schritt b) mit den darin enthaltenen Ausgangskristallen und nicht umgesetzten Vorläuferverbindungen ohne vorheriges Isolieren der synthetisierten Ausgangskristalle auf die Oberfläche der Trägerstruktur aufgetragen wird.

2. Verfahren nach Anspruch 1,
   wobei das Reaktionsgemisch zusätzlich zu dem Lösungsmittel und den Vorläuferverbindungen des Zeolithmaterials oder zeolithähnlichen Materials (iii) eine Templatspezies enthält.

3. Verfahren nach einem der Ansprüche 1 oder 2, wobei die nanoskaligen Ausgangskristalle eine Größe, bestimmt als mittlerer Äquivalentdurchmesser wie in der Beschreibung erläutert, von 20 bis 200 nm aufweisen.

4. Verfahren nach einem der Ansprüche 1 bis 3, wobei es sich bei der in Schritt d) gebildeten Beschichtung um eine Beschichtung handelt, die frei ist von Bindematerial.

5. Verfahren nach einem der Ansprüche 1 bis 4, wobei das bei der Umwandlung in Schritt d) gebildete Zeolithmaterial oder zeolithähnliche Material Ausgangskristalle in der Beschichtung verbindet.

6. Verfahren nach einem der Ansprüche 1 bis 5, wobei die Trägerstruktur aus einem metallischen oder keramischen Material gebildet ist.

7. Verfahren nach einem der Ansprüche 1 bis 6, wobei die Vorläuferverbindungen des Zeolithmaterials oder zeolithähnlichen Materials in der in Schritt a) bereit gestellten Suspension mindestens einen Typ einer Siliciumverbindung umfassen, die ausgewählt ist aus Kieselsäure, Salzen der Kieselsäure und Kieselsäureestern.

8. Verfahren nach einem der Ansprüche 1 bis 7, wobei die Vorläuferverbindungen des Zeolithmaterials oder zeolithähnlichen Materials in der in Schritt a) bereit gestellten Suspension mindestens einen Typ einer Aluminiumverbindung umfassen, die ausgewählt ist aus Aluminaten, Aluminiumsalzen, hydratisiertem Aluminium und Aluminiumalkoholaten.

9. Verfahren nach einem der Ansprüche 2 bis 8, wobei es sich bei der Templatspezies um ein Tetraorganoammonium-Kation oder ein Tetraorganophosphonium-Kation handelt.

10. Verfahren nach einem der Ansprüche 1 bis 9, wobei beim Schritt des Verdichtens der Suspension in Schritt c) mindestens 40 Gew.% des Lösungsmittels bezogen auf das Gesamtgewicht des Lösungsmittels in der aufzutragenden Suspension, entfernt werden.

11. Verfahren nach einem der Ansprüche 1 bis 10, wobei in Schritt d) das Halten der in Schritt c) erhaltenen Beschichtung auf der Oberfläche der Trägerstruktur in einer wasserdampfhaltigen Atmosphäre bei einer erhöhten Temperatur im Bereich von 100 bis 170 °C stattfindet.

12. Verfahren nach einem der Ansprüche 1 bis 11, wobei die Schritte b) und c) mehrfach durchlaufen werden.

## Claims

1. A process for producing a composite material having a support structure and a coating on the surface of said support structure, the coating comprising, as an active component, crystals of a zeolite material or a zeolite-like material, with intercrystalline mesopores and/or macropores being formed within the coating,

   **characterized in that** the process comprises the following steps:

   a) providing a suspension containing nanoscale starting crystals of a zeolite material or a zeolite-like material, as well as precursor compounds of the zeolite material or zeolite-like material,
   b) applying the suspension provided in step a) to the surface of the support structure,
   c) compacting the suspension applied in step b) by at least partially removing the solvent forming the liquid phase of the suspension in order to obtain a coating containing the starting crystals and the precursor compounds,
   d) keeping the coating obtained in step c) on the surface of the support structure in a vapor-containing atmosphere at an elevated temperature so that the contained precursor compounds are converted into a zeolite material or a zeolite-like material and, together with the starting crystals, form the coating comprising crystals of a zeolite material or a zeolite-like material,

   wherein the suspension is provided in step a) by synthesizing the starting crystals by partially reacting a reaction mixture which contains (i) a solvent, and (ii) the precursor compounds of the zeolite material or zeolite-like material,

   and wherein the suspension thus provided, with the starting crystals and unreacted precursor compounds contained therein, is applied in step b) to the surface of the support structure without prior isolation of the synthesized starting crystals.

2. The process as claimed in claim 1,
   wherein the reaction mixture contains, in addition to the solvent and the precursor compounds of the zeolite material or zeolite-like material, (iii) a template species.

3. The process as claimed in any one of claims 1 or 2, wherein the nanoscale starting crystals have a size, determined as the average equivalent diameter as illustrated in the description, of 20 to 200 nm.

4. The process as claimed in any one of claims 1 to 3, wherein the coating formed in step d) is a coating that is free of binding material.

5. The process as claimed in any one of claims 1 to 4, wherein the zeolite material or zeolite-like material formed during the conversion in step d) connects starting crystals in the coating.

6. The process as claimed in any one of claims 1 to 5, wherein the support structure is formed from a metallic or ceramic material.

7. The process as claimed in any one of claims 1 to 6, wherein the precursor compounds of the zeolite material or zeolite-like material in the suspension provided in step a) comprise at least one type of silicon compound selected from silicic acid, salts of silicic acid, and silicic acid esters.

8. The process as claimed in any one of claims 1 to 7, wherein the precursor compounds of the zeolite material or zeolite-like material in the suspension provided in step a) comprise at least one type of aluminum compound selected from aluminates, aluminum salts, hydrated aluminum, and aluminum alcoholates.

9. The process as claimed in any one of claims 2 to 8, wherein the template species is a tetraorganoammonium cation or a tetraorganophosphonium cation.

10. The process as claimed in any one of claims 1 to 9, wherein during the step of compacting the suspension in step c), at least 40% by weight of the solvent, based on the total weight of the solvent in the suspension to be applied, is removed.

11. The process as claimed in any one of claims 1 to 10, wherein in step d) keeping the coating obtained in step c) on the surface of the support structure in a water vapor-containing atmosphere is performed at an elevated temperature in the range of 100 to 170°C.

12. The process as claimed in any one of claims 1 to 11, wherein steps b) and c) are carried out a plurality of times.

**Revendications**

1. Procédé de production d'un matériau composite ayant une structure support et un revêtement sur la surface de la structure support, où le revêtement comprend, en tant que composants actifs, des cristaux d'un matériau de zéolithe ou d'un matériau analogue de zéolithe et où des méso- et/ou macropores inter-cristallins sont formés dans le revêtement,

    **caractérisé en ce que** le procédé comprend les étapes suivantes :

    a) préparation d'une suspension qui contient des cristaux nanométriques de départ provenant d'un matériau de zéolithe ou d'un matériau analogue de zéolithe, ainsi que des composés précurseurs de matériau de zéolithe ou de matériau analogue de zéolithe,
    b) application de la suspension préparée à l'étape a) sur la surface de la structure support,
    c) compaction de la suspension appliquée à l'étape b) par élimination au moins partielle du solvant qui forme la phase liquide de la suspension, pour obtenir un revêtement qui contient les cristaux de départ et les composés précurseurs,
    d) maintien du revêtement obtenu à l'étape c) sur la surface de la structure support dans une atmosphère contenant de la vapeur à une température élevée de sorte que les composés précurseurs présents sont transformés en un matériau de zéolithe ou un matériau analogue de zéolithe et forment conjointement avec les cristaux de départ le revêtement qui comprend des cristaux d'un matériau de zéolithe ou d'un matériau de type zéolithe,

    dans lequel la préparation de la suspension à l'étape a) s'effectue en synthétisant les cristaux de départ par conversion partielle d'un mélange réactionnel qui contient (i) un solvant ainsi que (ii) les composés précurseurs du matériau de zéolithe ou du matériau analogue de zéolithe,
    et dans lequel la suspension ainsi préparée avec les cristaux de départ qu'elle contient et les composés précurseurs n'ayant pas réagi est appliquée à l'étape b) sur la surface de la structure support sans isolement préalable des cristaux de départ synthétisés.

2. Procédé selon la revendication 1,
dans lequel le mélange réactionnel contient en plus du solvant et des composés précurseurs du matériau de zéolithe ou du matériau analogue de zéolithe (iii) une espèce gabarit.

3. Procédé selon l'une des revendications 1 ou 2, dans lequel les cristaux de départ nanométriques présentent une taille, déterminée en tant que diamètre moyen équivalent comme expliqué dans la description, de 20 à 200 nm.

4. Procédé selon l'une des revendications 1 à 3, dans lequel le revêtement formé à l'étape d) est un revêtement qui est dépourvu de matériau liant.

**5.** Procédé selon l'une des revendications 1 à 4, dans lequel le matériau de zéolithe ou le matériau analogue de zéolithe formé lors de la conversion à l'étape d) lie des cristaux de départ dans le revêtement.

**6.** Procédé selon l'une des revendications 1 à 5, dans lequel la structure support est formée à partir d'un matériau métallique ou céramique.

**7.** Procédé selon l'une des revendications 1 à 6, dans lequel les composés précurseurs du matériau de zéolithe ou du matériau analogue de zéolithe dans la suspension préparée à l'étape a) comprennent au moins un type d'un composé de silicium, qui est choisi parmi l'acide silicique, les sels de l'acide silicique et les esters d'acide silicique.

**8.** Procédé selon l'une des revendications 1 à 7, dans lequel les composés précurseurs du matériau de zéolithe ou du matériau analogue de zéolithe dans la suspension préparée à l'étape a) comprennent au moins un type d'un composé d'aluminium, qui est choisi parmi les aluminates, les sels d'aluminium, l'aluminium hydraté et les alcoolates d'aluminium.

**9.** Procédé selon l'une des revendications 2 à 8, dans lequel l'espèce gabarit est un cation de tétra-organo-ammonium ou un cation de tétra-organophosphonium.

**10.** Procédé selon l'une des revendications 1 à 9, dans lequel, lors de l'étape de compaction de la suspension à l'étape c), au moins 40 % en poids du solvant par rapport au poids total du solvant dans la suspension à appliquer sont éliminés.

**11.** Procédé selon l'une des revendications 1 à 10, dans lequel, à l'étape d), le maintien du revêtement obtenu à l'étape c) sur la surface de la structure support s'effectue dans une atmosphère contenant de la vapeur d'eau à une température élevée dans la plage de 100 à 170 °C.

**12.** Procédé selon l'une des revendications 1 à 11, dans laquelle les étapes b) et c) sont parcourues plusieurs fois.

**Abbildung 1**

**Abbildung 2**

**Abbildung 3**

20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9219574 A1

**In der Beschreibung aufgeführte Nicht-Patentliteratur**

- **B. MITRA** ; **D. KUNZRU**. Washcoating of Different Zeolites on Cordierite Monoliths. *Journal of the American Ceramic Society*, vol. 2008 (91), 64-70
- **J. BAUER** ; **R. HERRMANN** ; **W. MITTELBACH** ; **W. SCHWIEGER**. Zeolite/aluminum composite adsorbents for application in adsorption refrigeration. *International Journal of Energy Research*, vol. 2009 (33), 1233-1249
- **S. IVANOVA** ; **B. LOUIS** ; **B. MADANI** ; **J. P. TESSONNIER** ; **M. J. LEDOUX** ; **C. PHAM-HUU**. ZSM-5 coatings on β-SiC monoliths: Possible new structured catalyst for the methanol-to-olefins process. *Journal of Physical Chemistry C*, vol. 2007 (111), 4368-4374
- **A. ZAMPIERI** ; **A. DUBBE** ; **W. SCHWIEGER** ; **A. AVHALE** ; **R. MOOS**. ZSM-5 zeolite films on Si substrates grown by in situ seeding and secondary crystal growth and application in an electrochemical hydrocarbon gas sensor. *Microporous and Mesoporous Materials*, vol. 2008 (111), 530-535
- **C. S. TSAY** ; **A. S. T. CHIANG**. The synthesis of colloidal zeolite TPA-silicalite-1. *Microporous and Mesoporous Materials*, vol. 1998 (26), 89-99
- **A. E. PERSSON** ; **B. J. SCHOEMAN** ; **J. STERTE** ; **J. E. OTTERSTEDT**. The synthesis of discrete colloidal particles of TPA-silicalite-1. *Zeolites*, vol. 1994 (14), 557-567
- **T. WAKIHARA** ; **A. IHARA** ; **S. INAGAKI** ; **J. TATAMI** ; **K. SATO** ; **K. KOMEYA** ; **T. MEGURO** ; **Y. KUBOTA** ; **A. NAKAHIRA**. Top-Down Tuning of Nanosized ZSM-5 Zeolite Catalyst by Bead Milling and Recrystallization. *Crystal Growth & Design*, vol. 2011 (11), 5153-5158
- ImageJ. U. S. National Institutes of Health, 1997
- **HABER et al.** IUPAC. *Pure and Appl. Chem.*, 1991, vol. 63, 1227